# EUROPÄISCHE PATENTSCHRIFT

(11) **EP 1 422 988 B1**
(45) Veröffentlichungstag und Bekanntmachung des Hinweises auf die Patenterteilung: **30.03.2005**
(21) Anmeldenummer: 02767420.9
(22) Anmeldetag: 22.08.2002
(51) Int. Cl.: A01B 45/02

(54) **RASENBELÜFTUNGSGERÄT**
LAWN AERATING DEVICE
APPAREIL POUR AERER LA PELOUSE

(30) Priorität: 24.08.2001 DE 10141537
(43) Veröffentlichungstag der Anmeldung: 02.06.2004
(73) Patentinhaber: Wolf-Garten GmbH & Co. KG, 57518 Betzdorf (DE)
(72) Erfinder: GRAF, Eberhard, 57548 Kirchen (DE)
(74) Vertreter: Koch, Günther, Dipl.-Ing.
(86) Internationale Anmeldenummer: PCT/EP2002/009410
(87) Internationale Veröffentlichungsnummer: WO 2003/017746

(56) Entgegenhaltungen:
- DE-C- 19 644 061
- GB-A- 1 221 765
- GB-A- 2 116 412
- US-A- 4 446 681
- US-B1- 6 237 695

## Beschreibung

Die Erfindung bezieht sich auf ein Rasenbelüftungsgerät mit einer in einem Fahrgestell drehbar gelagerten Walze, die aus Scheiben zusammengefügt ist, welche elastische radial abstehende Lüfterelemente in Form von Drahtfederarmen tragen. Derartige Geräte begünstigen den notwendigen Luftaustausch an der Bodenoberfläche, der durch abgestorbene Pflanzenteile beeinträchtigt werden kann. Durch die rotierenden Federn eines derartigen Rasenbelüftungsgerätes wird der Zwischenraum zwischen den Rasenpflanzen gelockert, und die Rasennarbe wird luftiger, und so können Nährstoffe und Wasser wieder besser an die Rasenwurzeln gelangen. Die Lüfterwalze wird bei derartigen Geräten motorisch angetrieben, und die Drahtfedern greifen mit einer veränderbaren Arbeitstiefe an der Rasennarbe an.

Wenn diese Drahtfederarme im Betrieb einer überhöhten Beanspruchung unterworfen werden, wenn sie beispielsweise auf Steine oder andere harte Gegenstände derart auftreffen, daß sie diese auftretenden Kräfte nicht abfedern können, dann brechen diese Federn gewöhnlich in der Nähe des Umfangs der Walze ab.

Bei bekannten Geräten (z.B. EP-A-0 024 696) mußte zum Ersatz einer abgebrochenen Drahtfeder die Trägerwalze so weit demontiert werden, bis die darin eingeklemmte Feder entnommen und durch eine neue Drahtfeder ersetzt werden konnte. Danach war wiederum eine Verspannung erforderlich, um die Drahtfeder festzuklemmen. Von diesem bekannten Stand der Technik geht der Oberbegriff des Patentanspruchs 1 aus.

Die US-A-3 460 629 zeigt ein Rasenbelüftungsgerät, bei dem gemäß Fig. 4 und 5 Federarme paarweise zusammengefaßt sind, wobei die Windungen der Federarme von außen auf Zapfen aufgesetzt sind, die an Trägern seitlich vorstehen, welche mittels Schraubbolzen auf einer sechseckigen Hohlwelle aufgeschraubt sind. Diese Trägerstücke legen gleichzeitig den Verbindungsbügel zwischen- den beiden Federarmen an der Hohlwelle fest, so daß eine Auswechslung eines Federpaares nur nach Lösen der Schraubverbindung möglich ist. Auch bei den anderen Ausführungsbeispielen dieser Druckschrift ist ein Auswechseln der Federn nur nach Lösen einer Schraubverbindung möglich.

Die GB-A-2 116 412 zeigt eine Vorrichtung zur Rasenbelüftung, bei der Federarme eine Wicklungsspule zu Paaren zusammengefaßt sind, wobei die Spule jeweils in einer zylindrischen Fassung ruht, in die die Federn über einen Schlitz einsetzbar sind. Die die Federarme tragenden Formkörper sind auf der horizontalen Messerwelle eines Rasenmähers aufklemmbar, damit dieser als Rechen wirken kann. Die Montage der Federn kann hier jedoch offensichtlich nur dann erfolgen, wenn der Formkörper vom Rasenmäher abgenommen ist, d.h. nicht im Betriebszustand des Mähers.

Der Erfindung liegt die Aufgabe zugrunde, ein gattungsgemäßes Rasenbelüftungsgerät zu schaffen, bei dem eine unbrauchbar gewordene Lüfterfeder auf einfache Weise ohne Montage der Trägerwalze oder ihrer Scheiben ausgewechselt werden kann und im Betrieb sicher gehaltert ist.

Gelöst wird die gestellte Aufgabe durch die im Kennzeichnungsteil des Patentanspruchs 1 angegebenen Merkmale.

Beim erfindungsgemäßen Rasenbelüftungsgerät ist demgegenüber der Einsatz bzw. die Auswechslung der Federpaare problemlos vom Benutzer durchführbar, und zwar sogar ohne Zuhilfenahme von Werkzeugen. Besonders einfach ist die Auswechslung unter Benutzung einer Kombizange.

Auf diese Weise wird es möglich, abgebrochene Lüfterfedern ohne Montage der Walze zu entnehmen und durch neue zu ersetzen, einfach dadurch, daß die beiden Federarme gegeneinandergepreßt und in die entsprechenden Ausnehmungen eines Scheibenpaares eingesteckt werden, worauf durch Ausspreizen eine Verankerung erfolgt.

Die Erfindung besteht demgemäß darin, jeweils die Federarme paarweise zusammenzufassen, wobei der Verbindungsschenkel zweier Federarme die Spreizwirkung gewährleistet, so daß die beiden Federarme mit Verankerungsmitteln in den radialen Ausnehmungen festlegbar sind. Vorzugsweise erfolgt das Aufspreizen in Axialrichtung, wobei in axial gegenüberliegenden Flächen von radialen Ausnehmungen der Scheiben Verankerungselemente eingesetzt sind. Diese sind als Zapfen ausgebildet, auf die zwei aufgewickelte Spulen der Federarme aufsetzbar sind, nachdem die beiden Federarme gegeneinander gebogen und die Spulen in den Zwischenraum zwischen den Verankerungszapfen eingefügt sind, so daß sich die Spulen auf die Verankerungszapfen aufspreizen können.

Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Fig. 1 ist eine perspektivische Darstellung einer die Lüfterfedern tragenden Walze eines Rasenbelüftungsgerätes;
Fig. 2 ist eine perspektivische Darstellung eines Trägerscheibenpaares der Walze gemäß Fig. 1, woraus die Montage bzw. Demontage der Lüfterfeder erkennbar ist.

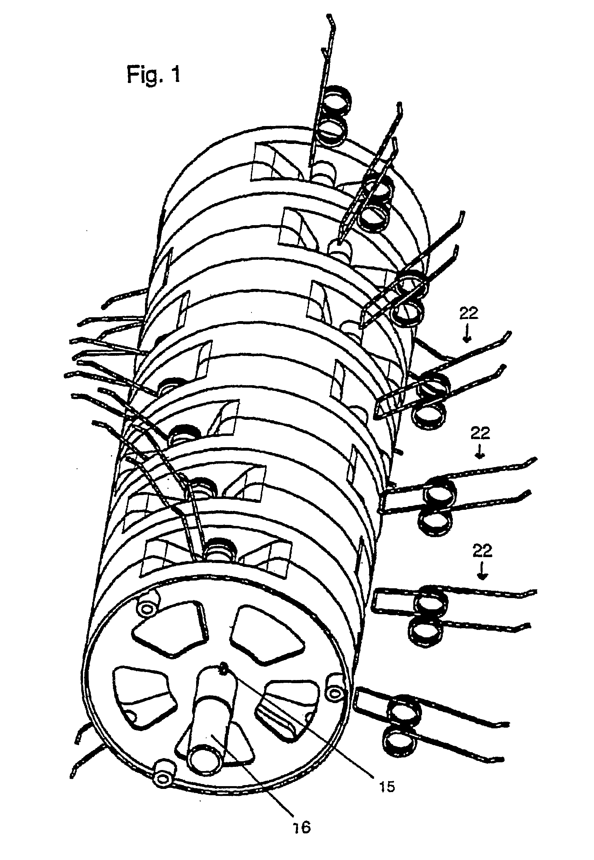

Die Trägerwalze gemäß Fig. 1 besteht aus Scheibenpaaren 10, 12, die mit ihrem zentralen Loch 14 auf eine Welle 16 aufgeschoben und axial gegeneinander verspannt sind. Die Welle 16 ist in einem nicht dargestellten Fahrgestell des Rasenbelüftungsgerätes drehbar gelagert und wird entweder über die Laufräder des Fahrgestells oder einen Motor in Drehung versetzt, wenn das Gerät über den Rasen bewegt wird.

Die Trägerscheiben 10, 12 eines Paares sind durch Formschluß drehfest miteinander verbunden. Die drehfeste Verbindung auf der Welle 16 kann durch Metall-Mitnehmer 15 erfolgen, die an der Welle 16 angeschweißt sind. Die Stirnseiten jedes Paares sind mit jeweils drei axial vorstehenden Paßstiften 18 versehen, die formschlüssig in Paßlöcher 20 des benachbarten Paares eingreifen. Dadurch wird es möglich, die Scheibenpaare gegeneinander im Winkel derart zu versetzen, daß die von ihnen getragenen Lüfterfedern 22 über den Walzenumfang gestaffelt sind, wie dies aus Fig. 1 ersichtlich ist. Jede Lüfterfeder 22 besteht aus einem speziell gebogenen Federdraht. Jede Lüfterfeder weist zwei Federarme 24 auf, deren Enden in Drehrichtung nach vorn abgekröpft sind. Diese Federarme 24 stehen von den beiden äußeren Enden von aus dem Federdraht aufgewickelten Spulen 26 vor. Die inneren Enden der Spulen 26 sind in einem U-förmigen Verbindungsbügel 28 fortgesetzt. Die gesamte so geformte Lüfterfeder 22 besteht aus einem einzigen Federdrahtstück.

Die Scheibenpaare weisen radiale Ausnehmungen im Winkelabstand von 120° zueinander auf, in die die Verbindungsbügel 28 der Lüfterfedern einsteckbar sind. Die Halterung der Lüfterfedern erfolgt durch Trägerzapfen 32, die innerhalb der Ausnehmung 30 axial mit Abstand gegenüberstehen. Der Durchmesser der Trägerzapfen 32 ist dem Durchmesser der Spulen 26 angepaßt, derart, daß die Spulen auf die Trägerzapfen aufgesteckt werden können.

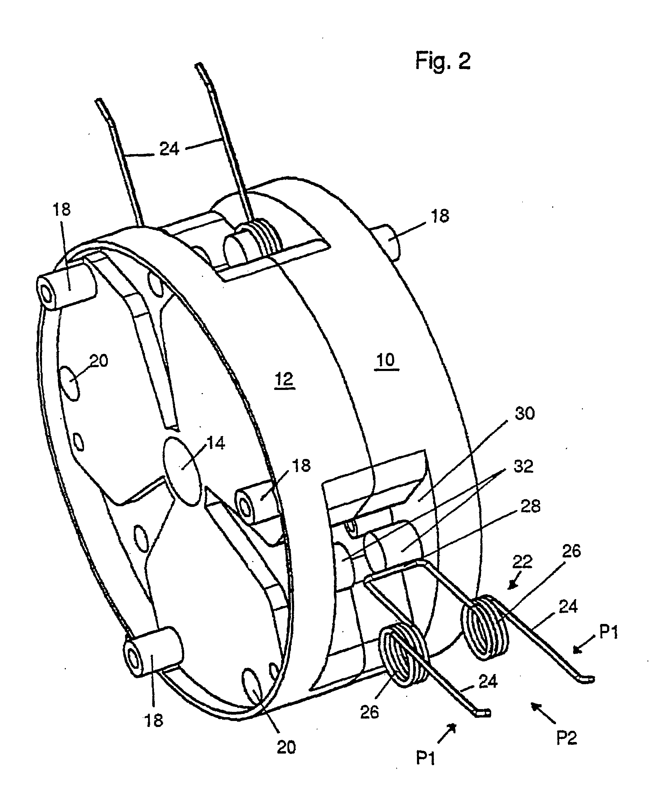

Die Montage dieser Lüfterfedern kann erfolgen, während die Scheibenpaare der Walze gegeneinander verspannt bleiben, d.h. in ihrer Arbeitsstellung befindlich sind. Die Montage kann dadurch geschehen, daß die Federarme 24 gemäß Fig. 2 in Richtung der Pfeile P1 gegeneinandergedrückt werden und die Lüfterfeder in Richtung des Pfeiles P2 eingesteckt wird. Der gegenseitige axiale Abstand der Trägerzapfen 32 ist derart, daß die Spulen 26 im seitlich zusammengedrückten Zustand auf die Zapfen aufgesteckt werden können. Nachdem das Aufstecken erfolgt ist, spreizt sich der Verbindungsbügel 28, und die Lüfterfedern 22 werden von den Zapfen 32 sicher abgestützt. Bei Federbruch können die Lüfterfedern auf die gleiche Weise wieder entnommen und durch neue ersetzt werden, ohne daß es erforderlich wäre, die gegenseitige axiale Verspannung der Trägerscheiben und der Scheibenpaare zu lösen.

### Bezugszeichenliste

- 10: Trägerscheibe
- 12: Trägerscheibe
- 14: zentrales Loch
- 15: Mitnehmer
- 16: Welle
- 18: Paßstift
- 20: Paßloch
- 22: Lüfterfeder
- 24: Federarm
- 26: Spule
- 28: Verbindungsbügel
- 30: radiale Ausnehmungen
- 32: Trägerzapfen
- P1: Pfeil
- P2: Pfeil

## Patentansprüche

1. Rasenbelüftungsgerät mit einer in einem Fahrgestell drehbar gelagerten Walze, wobei
- die Walze aus Scheiben (10, 12) zusammengefügt ist;
- die Scheiben (10, 12) radiale Ausnehmungen (30) aufweisen, in denen Lüfterelemente (22) verankert sind;
- die Lüfterelemente (22) aus radial abstehenden, elastischen Drahtfederarmen (24) bestehen;
- die Drahtfederarme (24) an ihrem inneren Verankerungsbereich eine aus mehreren Windungen bestehende Spule (26) und einen Fortsatz aufweisen;
- in den Ausnehmungen (30) achsparallel verlaufende Trägerzapfen (32) angeordnet sind, auf die die Spulen (26) der Federarme aufgesetzt sind;
- die Fortsätze (28) innerhalb der Ausnehmungen (30) in Beanspruchungsrichtung formschlüssig abgestützt sind;
**gekennzeichnet durch** die folgenden Merkmale:
- die Fortsätze zweier Federarme (24) sind zu einem elastischen Verbindungsbügel vereinigt und bilden jeweils ein Federarmpaar;
- in den Ausnehmungen (30) sind jeweils zwei Trägerzapfen (32) axial gegenüberstehend mit einem solchen Abstand zueinander angeordnet, daß die Spulen (26) eines Federpaares dazwischen einsetzbar und auf die gegenüberliegenden Trägerzapfen (32) aufspreizbar sind.

2. Rasenbelüftungsgerät nach Anspruch 1,
**dadurch gekennzeichnet, daß** die Ausnehmungen (30) jeweils in den benachbarten Stirnseiten eines Trägerscheibenpaares (10, 12) angeordnet sind.

3. Rasenbelüftungsgerät nach den Ansprüchen 1 und 2,
**dadurch gekennzeichnet, daß** die Trägerscheiben jeweils drei im Winkelabstand von 120° zueinander versetzte Ausnehmungen (30) aufweisen.

4. Rasenbelüftungsgerät nach einem der Ansprüche 1 bis 3,
**dadurch gekennzeichnet, daß** benachbarte Trägerscheibenpaare (10, 12) in Umfangsrichtung über Paßelemente (18, 20) formschlüssig festlegbar sind.

5. Rasenbelüftungsgerät nach Anspruch 4,
**dadurch gekennzeichnet, daß** die Federarme (24) benachbarter Trägerscheibenpaare in Umfangsrichtung unter einem vorbestimmten Winkel versetzt sind.

## Claims

1. A lawn aerating device comprising a roller mounted rotatably in a chassis, wherein
- the roller is composed of discs (10, 12);
- the discs (10, 12) have radial openings (30) in which aerator elements (22) are anchored;
- the aerator elements (22) comprise radially projecting, elastic wire spring arms (24);
- the wire spring arms (24) at their inner anchorage region have a coil (26) comprising a plurality of turns and an extension;
- arranged in the openings (30) are carrier projections (32) which extend in axis-parallel relationship and on to which the coils (26) of the spring arms are fitted; and
- the extensions (28) are supported in positively locking relationship in the loading direction within the openings (30);
**characterised by** the following features:
- the extensions of two spring arms (24) are combined to afford an elastic connecting loop and each form a respective pair of spring arms; and
- two respective carrier projections (32) are arranged in the openings (30) in axially opposite relationship at such a spacing from each other that the coils (26) of a pair of springs can be inserted therebetween and can be spread on to the oppositely disposed carrier projections (32).

2. A lawn aerating device according to claim 1 **characterised in that** the openings (30) are respectively arranged in the adjacent ends of a pair of carrier discs (10, 12).

3. A lawn aerating device according to claims 1 and 2 **characterised in that** the carrier discs each have three openings (30) disposed at an angular spacing of 120° relative to each other.

4. A lawn aerating device according to one of claims 1 to 3 **characterised in that** adjacent pairs of carrier discs (10, 12) can be positively lockingly fixed in the peripheral direction by way of fitting elements (18, 20).

5. A lawn aerating device according to claim 4 **characterised in that** the spring arms (24) of adjacent pairs of carrier discs are displaced at a predetermined angle in the peripheral direction.

## Revendications

1. Aérateur à gazon avec un rouleau monté à rotation dans un châssis, selon lequel
- le rouleau est constitué de disques assemblés (10, 12) ;
- les disques (10, 12) présentent des évidements radiaux (30) dans lesquels sont ancrés des éléments d'aération (22) ;
- les éléments d'aération (22) sont constitués de bras élastiques de ressort (24) en fil métallique, faisant saillie radialement ;
- les bras de ressort (24) en fil métallique présentent, sur leur région d'ancrage intérieure, une bobine (26) constituée de plusieurs spires et un prolongement;
- des tourillons porteurs (32) s'étendant en parallélisme axial sont disposés dans les évidements (30), tourillons sur lesquels sont montées les bobines (26) des bras de ressort ;
- les prolongements (28) s'appuient en engagement positif dans la direction de sollicitation à l'intérieur des évidements (30),
**caractérisé par** les caractéristiques suivantes
- les prolongements de deux bras de ressort (24) sont réunis en un étrier de liaison élastique et forment chaque fois une paire de bras de ressort ;
- deux tourillons porteurs (32) sont chaque fois disposés dans les évidements (30) en se faisant axialement face à une distance mutuelle telle que les bobines (26) d'une paire de ressorts peuvent être insérées entre eux et écartées sur les tourillons porteurs opposés (32).

2. Aérateur à gazon selon la revendication 1, **caractérisé en ce que** les évidements (30) sont respectivement disposés dans les côtés frontaux voisins d'une paire de disques porteurs (10, 12).

3. Aérateur à gazon selon les revendications 1 et 2, **caractérisé en ce que** les disques porteurs présentent chacun trois évidements (30) mutuellement décalés à un espacement angulaire de 120°.

4. Aérateur à gazon selon l'une des revendications 1 à 3, **caractérisé en ce que** des paires voisines de disques porteurs (10, 12) peuvent être fixées en position en direction circonférentielle par un engagement positif au moyen d'éléments de positionnement (18, 20).

5. Aérateur à gazon selon la revendication 4, **caractérisé en ce que** les bras de ressort (24) de paires voisines de disques porteurs sont décalés d'un angle prédéfini en direction circonférentielle.
